# EUROPÄISCHE PATENTSCHRIFT

(11) **EP 2 050 484 B1**
(45) Veröffentlichungstag und Bekanntmachung des Hinweises auf die Patenterteilung: **30.06.2010**
(21) Anmeldenummer: 08014886.9
(22) Anmeldetag: 22.08.2008
(51) Int. Cl.: A62C 2/10, B32B 17/10

(54) **Rauchschürze**
Smoke curtain
Tablier coupe-fumée

(30) Priorität: 19.10.2007 DE 102007050536
(43) Veröffentlichungstag der Anmeldung: 22.04.2009
(73) Patentinhaber: Schott AG, 55122 Mainz (DE)
(72) Erfinder: Panzner, Gerrit, 07407 Rudolstadt (DE); Neupert, Georg, 07751 Jena (DE); Freitag, Rüdiger, 36433 Moorgrund / Etterwinden (DE); Fiedler, Hans-Joachim, 98693 Ilmenau (DE); Klossek, Jens, 99423 Weimann (DE)
(74) Vertreter: Fleck, Hermann-Josef

(56) Entgegenhaltungen:
- WO-A-03/092818
- WO-A-2004/035308
- GB-A- 2 380 160
- US-B1- 6 838 180

## Beschreibung

Die Erfindung betrifft eine Rauchschürze mit wenigstens zwei Scheiben, bestehend aus einem hitzebeständigen Glasmaterial (nachfolgend Glasscheiben genannt), wobei die Glasscheiben unter Vermittlung einer zumindest bereichsweise zwischen den Glasscheiben angeordneten Zwischenschicht miteinander verbunden sind und wobei die Zwischenschicht aus einem im Brandfall nicht brennbaren Material besteht.

Rauchschürzen dienen der Kanalisierung, dem Einschluss und/oder der Verhinderung der Ausbreitung von Rauch (Brandgasen). Im Sinne der Europäischen Norm DIN EN 12001-1 wird jede Form einer Barriere gegen die Bewegung von Brandgasen als Rauchschürze betrachtet. Rauchschürzen schränken die Bewegung von Brandgasen innerhalb eines Bauwerks im Falle eines Brandes ein.

Der Gebrauch von Rauch- und Wärmeabzugsanlagen zur Schaffung rauchfreier Bereiche unterhalb einer schwebenden Rauchschicht ist inzwischen weit verbreitet. Ihr Wert in der Unterstützung der Evakuierung von Menschen aus Bauwerken, der Minderung von Brandschäden und finanziellen Verlusten durch Verhindern von Rauchkontamination, der Erleichterung der Brandbekämpfung, der Reduzierung von Dachtemperaturen und Verzögerung der seitlichen Brandausbreitung ist gesicherte Erkenntnis.

Der Einsatz von statischen Rauchschürzen aus Glas ist Stand der Technik. Dabei kommen thermisch vorgespannte monolithische Gläser zum Einsatz (zum Beispiel Einscheibensicherheitsglas ESG), die größtenteils punktförmig gelagert (aufgehängt) sind.

Herkömmliche Rauchschürzen aus Einscheibensicherheitsglas oder Glaskeramik erfüllen die Anforderungen der DIN EN 12001-1 an die Widerstandsfähigkeit und Funktionalität im Brandfall. Aufgrund der Vorspannung und/oder der geringen bzw. fehlenden Wärmeausdehnung widerstehen sie der thermischen Belastung.

Trotzdem ist der Einsatz derartiger Rauchschürzen begrenzt, da sowohl die vorgespannten Scheiben als auch Glaskeramikscheiben schon bei geringer mechanischer Belastung (Stoß mit einem harten Gegenstand) in Bruchstücke oder gar scharfkantige Scherben zerfallen. Da Rauchschürzen üblicher Weise und funktionsgemäß über Kopf angeordnet werden (zum Beispiel Deckenaufhängung), können im Schadensfall herabfallende Teile Personen ernsthaft schädigen oder verletzen.

Der sichere Einsatz von transparenten Rauchschürzen nach Stand der Technik beschränkt sich somit auf Bereiche ohne Publikums- und/oder Personenverkehr.

Es ist Aufgabe der Erfindung, eine Rauchschürze aus Glasmaterial zu schaffen die sich auch nach mechanischer Schädigung durch eine ausreichende Tragfähigkeit auszeichnet und von der im Brandfall keine Gefährdung ausgeht.

Diese Aufgabe wird mit den Merkmalen des Anspruches 1 gelöst. Demgemäß ist es vorgesehen, dass die Rauchschürze aus wenigstens zwei Scheiben aus Glasmaterial (Glasscheiben) bestehen, die der thermischen Belastung im Brandfall gemäß DIN EN 12001-1 standhalten. Die beiden Glasscheiben sind mittels einer Zwischenschicht miteinander verbunden. Im Falle einer mechanischen Schädigung können eine oder beide Glasscheiben brechen. Die Bruchstücke werden dann mittels der Zwischenschicht gehalten. Die Rauchschürze hat dabei eine ausreichende Rest-Tragfähigkeit, um zum einen die Rauchleitfunktion zumindest über einen gewissen Zeitraum aufrecht zu erhalten und um zum anderen nicht in Teilen oder als Ganzes herab zu fallen. Die Zwischenschicht besteht aus einem nicht brennbaren Material. Damit ist verhindert, dass sie im Brandfall aufschmilzt und/oder als brennende und/oder sehr heiße Masse Personen gefährdend abtropft.

Gemäß einer bevorzugten Ausgestaltungsvariante der Erfindung kann es vorgesehen sein, dass die Viskosität der Zwischenschicht bei Temperaturen ≤ 600° C derart eingestellt ist, dass die Zwischenschicht-Substanz nicht aus dem zwischen den Glasscheiben gebildeten Zwischenraum ausläuft oder austropft.

Um den gestellten ästhetischen Architekturanforderungen zu genügen, empfiehlt es sich, das Material für die Zwischenschicht ebenso wie das Glasmaterial für die Glasscheiben transparent zu wählen.

Eine bevorzugte Ausführung der Erfindung ist dergestalt, dass die Zwischenschicht von einem Polymermaterial, insbesondere organischen Polymermaterial, gebildet ist, das im Brandfall verkohlt und/oder zersetzt wird. Dadurch, dass die Zwischenschicht verkohlt beziehungsweise zersetzt wird, geht sie nicht derart in den flüssigen Zustand über, dass sie von der Rauchschürze abtropfen kann.

Ein Abtropfen von Zwischenschichtmaterial vor Erreichen seiner Verkohlung beziehungsweise Zersetzung kann durch einen ausreichend geringen Spaltabstand eingestellt verhindert werden.

Demgemäß kann es vorgesehen sein, dass die Glasscheiben im Bereich zwischen 0,3 bis 3,0 mm zueinander beabstandet angeordnet sind. Damit werden für Rauchschürzen mit Zwischenschichten aus organischem Polymermaterial die Klassifizierungsvorschriften D 30 und/oder DH 30 im Sinne der DIN EN 12001-1 sicher erreicht.

Noch bessere Ergebnisse lassen sich erreichen, wenn vorgesehen ist, dass die Glasscheiben im Bereich zwischen 0,5 bis 0,8 mm zueinander beabstandet angeordnet sind.

Als Zwischenschicht lassen sich Folien, Kleber oder Gießmasse in den Zwischenbereich insbesondere vollflächig zwischen den Glasscheiben einbringen. Insbesondere hat sich der Einsatz eines PMMA-Gießharzes als geeignet erwiesen. Geeignet sind darüber hinaus organische Polymermaterialien, die durch Brand hemmende Additive beziehungsweise über das Basismaterial so eingestellt sind, dass sich die Wischenschicht im Brandfall nicht entzündet.

Die für die Rauchschürze verwendete Glasscheiben können als thermisch oder chemisch vorgespannte Glasscheibe ausgebildet sein oder aus einer Glasscheibe mit niedrigem Wärmeausdehnungskoeffizient oder einer Glassscheibe mit Nullausdehnung oder aus Glaskeramik bestehen.

Bevorzugter Weise kann es dabei vorgesehen sein, dass die beiden Glasscheiben aus verschiedenen Werkstoffen bestehen.

Prinzipieil sind alle Kombinationen denkbar. Im Einzelnen lassen sich mit den unterschiedlichen Laminaten verschiedene Resttragfähigkeiten im Bruchfall einstellen.

Kennzeichnend und unabdingbar jedoch ist, dass jede einzelne zur Herstellung des Laminates verwandte Glasscheibe der thermischen Belastung im Brandfall widerstehen kann. Die Dicke der eingesetzten Scheiben spielt nur eine untergeordnete Rolle.

Die Erfindung wird im Folgenden anhand von in den Zeichnungen dargestellten Ausführungsbeispielen erläutert.

Es zeigen:
- Fig. 1: in Seitenansicht eine an einem Gebäudeteil angebaute statische Rauchschürze,
- Fig. 2: die Darstellung gemäß Fig. 1 in Frontansicht,
- Fig. 3: in Seitenansicht eine an einem Gebäudeteil angebaute zweite Variante einer statischen Rauchschürze und
- Fig. 4: die Darstellung gemäß Fig. 3 in Frontansicht.

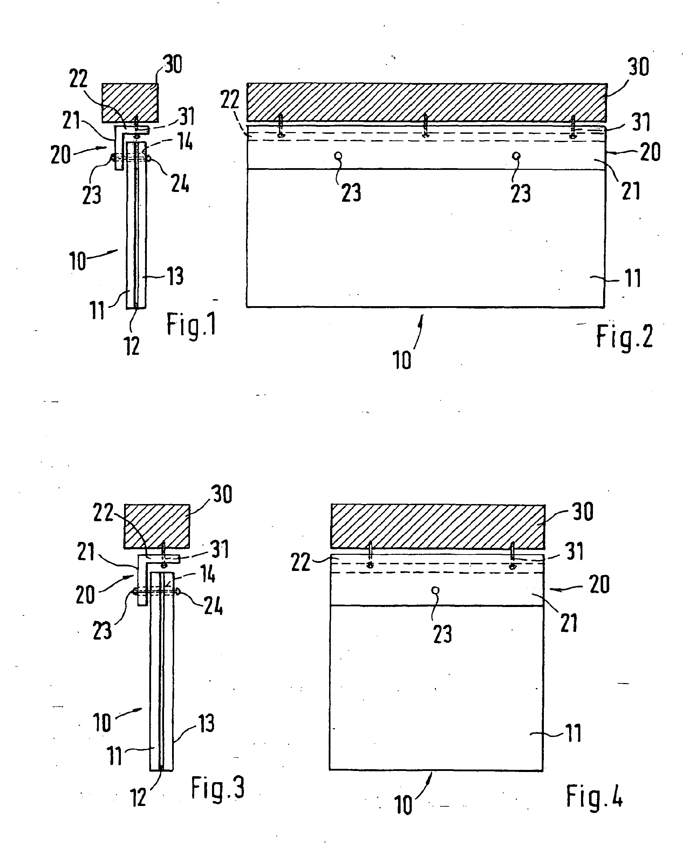

In der Fig. 1 ist eine statische Rauchschürze 10 gezeigt. Sie besteht aus einem Laminat mit zwei Glasscheiben 11, 13 und einer Zwischenschicht 12. Die Glasscheiben 11, 13 können dabei aus den gleichen oder unterschiedlichen Glasmaterialien bestehen. Dabei müssen die Glasscheiben jeweils ausreichend brandbeständig im Sinne der DIN EN 12001-1 sein.

Die Glasscheiben können beispielsweise aus einem thermisch oder chemisch vorgespannten Glas bestehen, als Glaskeramikscheibe oder Glasscheibe mit geringem Wärmeausdehnungskoeffizient ausgeführt sein.

Die beiden Glasscheiben 11, 13 sind zueinander parallel beabstandet angeordnet. Vorliegend ist ein Spaltabstand von 1 mm gewählt. Die Scheibendicke betrug jeweils 5 mm. Der gesamte Spaltbereich ist mit einem nicht brennbaren Acryl-Gießharz, beispielsweise einem PMMA-Gießharz, beispielsweise DM 2775-Material der Fa. Cytec Industries Inc. ausgefüllt, das die Zwischenschicht 12 bildet. Dieses PMMA-Gießharz ist in der WO 2004/035308 A1 beschrieben.

Die Rauchschürze ist mittels einer Aufhängung 20 an einem Gebäudeteil 30, beispielsweise einem Deckenträger etc., befestigbar. Die Aufhängung 20 weist ein im Querschnitt L-förmiges Profil mit zwei im rechten Winkel zueinander angeordneten Befestigungsschenkeln 21, 22 auf. Der erste Befestigungsschenkel 21 ist mit zwei Durchbrüchen 23 versehen, die mit Durchbrüchen 14 in der Rauchschürze fluchten. Durch die Durchbrüche 23 und 14 sind Verbindungselemente 24 zur Bildung einer punktförmigen Lagerung geführt. Der zweite Befestigungsschenkel 22 ist über Befestigungsmittel 31, beispielsweise Schrauben, mit dem Gebäudeteil 30 verdübelt.

Die Rauchschürze gemäß dem Ausführungsbeispiel nach Fig. 3 und 4 entspricht in ihrem prinzipiellen Aufbau der Rauchschürze gem. Fig. 1 und 2. Für die Glasscheibe 11 wurde ein 6 mm starkes thermisch vorgespanntes Glasmaterial gewählt. Für die zweite Glasscheibe eine 5 mm starke Glaskeramik. Der Spaltabstand beträgt 1 mm. Der gesamte Spaltbereich ist mit einem PMMA-Gießharz zur Bildung der Zwischenschicht 12 ausgefüllt.

Bei dem Ausführungsbeispiel nach Fig. 3 und 4 ist eine Einpunktaufhängung (Durchbruch 23) bei einer Rauchschürzenbreite von bis zu 1000 mm ausreichend.

Im Brandversuch entsprechend der Norm EN 1363-1 erreichen die Rauchschürzen gemäß Fig. 1 bis 4 die Klassifizierung DH 30.

Mit einem Körner angeschlagen, wurde nach Bruch beider Scheiben eine Resttragfähigkeit über 30 min. ermittelt.

## Patentansprüche

1. Rauchschürze mit wenigstens zwei Scheiben, bestehend aus einem hitzebeständigen Glasmaterial (11, 13), wobei die Glasscheiben (11, 13) unter Vermittlung einer zumindest bereichsweise zwischen den Glasscheiben (11, 13) angeordneten Zwischenschicht (12) miteinander verbunden sind und wobei die Zwischenschicht (12) aus einem im Brandfall nicht brennbaren Material besteht, **dadurch gekennzeichnet, dass** die Rauchschürze zur Bildung punktförmiger Lagerungen Durchbrüche (14) zur Aufnahme von Verbindungselemente (24) aufweist.

2. Rauchschürze nach Anspruch 1,
**dadurch gekennzeichnet,**
**dass** die Viskosität der Zwischenschicht (12) bei Temperaturen ≤ 600° C derart eingestellt ist, dass die Zwischenschicht-Substanz nicht aus dem zwischen den Glasscheiben (11, 13) gebildeten Zwischenraum ausläuft, austropft.

3. Rauchschürze nach einem der Ansprüche 1 oder 2, -
**dadurch gekennzeichnet,**
**dass** die Zwischenschicht (12) aus einem transparenten Material besteht.

4. Rauchschürze nach einem der Ansprüche 1 bis 3,
**dadurch gekennzeichnet,**
**dass** die Zwischenschicht (12) von einem Polymermaterial, insbesondere organischen Polymermaterial, gebildet ist, das im Brandfall verkohlt und/oder zersetzt wird.

5. Rauchschürze nach einem der Ansprüche 1 bis 4,
**dadurch gekennzeichnet,**
**dass** die Glasscheiben (11, 13) im Bereich zwischen 0,3 bis 3,0 mm zueinander beabstandet angeordnet sind.

6. Rauchschürze nach Anspruch 5,
**dadurch gekennzeichnet,**
**dass** die Glasscheiben (11, 13) im Bereich zwischen 0,5 bis 0,8 mm zueinander beabstandet angeordnet sind.

7. Rauchschürze nach einem der Ansprüche 1 bis 6,
**dadurch gekennzeichnet,**
**dass** die Zwischenschicht (13) als Folie, Kleber oder Gießmasse ausgebildet ist.

8. Rauchschürze nach Anspruch 7, -
**dadurch gekennzeichnet,**
**dass** die Zwischenschicht (12) von einem Acryl-Gießharz gebildet ist.

9. Rauchschürze nach einem der Ansprüche 1 bis 7 ,
**dadurch gekennzeichnet,**
**dass** die Glasscheiben (11, 13) jeweils von einer thermisch oder chemisch vorgespannten monolithischen Glasscheibe oder von einer Glasscheibe mit geringem Wärmedehnungskoeffizient oder einer Glaskeramikscheibe gebildet sind.

10. Rauchschürze nach Anspruch 9,
**dadurch gekennzeichnet,**
**dass** die beiden Glasscheiben (11, 13) aus verschiedenen Werkstoffen bestehen.

## Claims

1. Smoke barrier having at least two panes consisting of a heat-resistant glass material (11, 13), wherein the glass panes (11, 13) are connected to each other via an interlayer (12) which is arranged at least in certain regions between the glass panes (11, 13), and wherein the interlayer (12) consists of a material which is non-combustible in the event of fire, **characterized in that** the smoke barrier has apertures (14) for receiving connection elements (24) in order to form punctiform supports.

2. Smoke barrier according to Claim 1,
**characterized**
**in that** the viscosity of the interlayer (12) at temperatures ≤ 600°C is set in such a way that the interlayer substance does not run out or drop from the interspace formed between the glass panes (11, 13).

3. Smoke barrier according to either of Claims 1 and 2,
**characterized**
**in that** the interlayer (12) consists of a transparent material.

4. Smoke barrier according to one of Claims 1 to 3,
**characterized**
**in that** the interlayer (12) is formed from a polymer material, in particular organic polymer material, which carbonizes and/or decomposes in the event of fire.

5. Smoke barrier according to one of Claims 1 to 4,
**characterized**
**in that** the glass panes (11, 13) are spaced apart by a distance in the range between 0.3 and 3.0 mm.

6. Smoke barrier according to Claim 5,
**characterized**
**in that** the glass panes (11, 13) are spaced apart by a distance in the range between 0.5 and 0.8 mm.

7. Smoke barrier according to one of Claims 1 to 6,
**characterized**
**in that** the interlayer (12) is in the form of a film, adhesive or casting compound.

8. Smoke barrier according to Claim 7,
**characterized**
**in that** the interlayer (12) is formed from an acrylic casting resin.

9. Smoke barrier according to one of Claims 1 to 7,
**characterized**
**in that** the glass panes (11, 13) are each formed by a thermally or chemically prestressed, monolithic glass pane or by a glass pane having a low coefficient of thermal expansion or a glass-ceramic pane.

10. Smoke barrier according to Claim 9,
**characterized**
**in that** the two glass panes (11, 13) consist of different materials.

## Revendications

1. Tablier coupe-fumée présentant au moins deux plaques constituées d'un matériau de verre réfractaire (11, 13), les plaques de verre (11, 13) étant reliées l'une à l'autre par l'intermédiaire d'une couche intermédiaire (12) au moins dans certaines parties situées entre les plaques vitrifiées (11, 13), la couche intermédiaire (12) étant constituée d'un matériau incombustible en cas d'incendie,
**caractérisé en ce que**
le tablier coupe-fumée présente des perforations (24) qui logent des éléments de liaison (14) pour former des montages ponctuels.

2. Tablier coupe-fumée selon la revendication 1, **caractérisé en ce que** la viscosité de la couche intermédiaire (12) à une température ≤ 600°C est ajustée de telle sorte que la substance de la couche intermédiaire ne s'écoule ou ne s'égoutte pas hors de l'espace intermédiaire formé entre les plaques vitrifiées (11, 13).

3. Tablier coupe-fumée selon l'une des revendications 1 ou 2, **caractérisé en ce que** la couche intermédiaire (12) est constituée d'un matériau transparent.

4. Tablier coupe-fumée selon l'une des revendications 1 à 3, **caractérisé en ce que** la couche intermédiaire (12) est formée d'un matériau polymère et en particulier d'un matériau polymère organique qui se cokéfie et/ou se décompose en cas d'incendie.

5. Tablier coupe-fumée selon l'une des revendications 1 à 4, **caractérisé en ce que** les plaques de verre (11, 13) sont disposées à une distance mutuelle comprise dans la plage de 0,3 à 3,0 mm.

6. Tablier coupe-fumée selon la revendication 5, **caractérisé en ce que** les plaques de verre (11, 13) sont disposées à une distance mutuelle comprise dans la plage de 0,5 à 0,8 mm.

7. Tablier coupe-fumée selon l'une des revendications 1 à 6, **caractérisé en ce que** la couche intermédiaire (12) est configurée sous la forme d'une feuille, d'un adhésif ou d'une pâte de coulée.

8. Tablier coupe-fumée selon la revendication 7, **caractérisé en ce que** la couche intermédiaire (12) est formée d'une résine acrylique de coulée.

9. Tablier coupe-fumée selon l'une des revendications 1 à 7, **caractérisé en ce que** les plaques de verre (11, 13) sont toutes deux formées d'une plaque de verre monolithique trempé thermiquement ou chimiquement, par une plaque de verre à bas coefficient de dilatation thermique ou par une plaque en vitrocéramique.

10. Tablier coupe-fumée selon la revendication 9, **caractérisé en ce que** les deux plaques de verre (11, 13) sont constituées de matériaux différents.
